# EUROPEAN PATENT APPLICATION

(11) **EP 2 243 610 A1**
(43) Date of publication of application: **27.10.2010**
(21) Application number: 09158282.5
(22) Date of filing: 20.04.2009
(51) Int. Cl.: B29B 7/48, B29B 7/90, B29C 47/40, B29C 47/64

(54) **Method and apparatus for low shear mixing of shear sensitive materials**

(71) Applicant: Nederlandse Organisatie voor Toegepast -Natuurwetenschappelijk Onderzoek TNO, 2628 VK Delft (NL)
(72) Inventor: Kunen, Joseph Mathias Gerardus, 3123 PN Schiedam (NL); Fischer, Rudolf Hartmut, 5731 TP Mierlo (NL); Langeveld, Petrus Cornelius Gerardus, 5658 AS Eindhoven (NL)
(74) Representative: Hatzmann, Martin

(57) **Abstract**

Disclosed is an apparatus (1) for continuously blending a filler and polymer. The apparatus includes an elongate barrel housing (3), and a pair of coextensive first and second extruder screws (5, 7; 305, 307) extend longitudinally of the barrel housing (3) and define an upstream end (11; 311) and a downstream end (13; 313). The barrel housing (3) and the first and second extruder screws (5, 7; 305, 307) together define a first conveying zone (15; 315) and at least one mixing zone (17; 367, 377). The first conveying zone (15; 315) is positioned between the upstream end (11; 311) and the at least one mixing zone (17; 367, 377), and the at least one mixing zone (17; 367, 377) includes a first mixing element (129; 229; 329; 329A, 329B; 429) associated with the first extruder screw (5; 305) and a mating second mixing element (131; 231; 331; 331A, 331B; 431) associated with the second extruder screw(7; 307). The first and second mixing elements have mating convoluting contours. A method of continuously mixing includes feeding the filler and the polymer to the upstream end (11; 311).

## Description

The invention relates to mixing under low stress conditions, more in particular to continuous chaotically advective mixing of shear sensitive materials. An example of such a combination is a polymer, an inherently conductive polymer and/or electrically conductive filler(s) for obtaining a conductive polymer blend.

Enhanced mixing of viscous fluids, such as polymers, and of fluids and filler particles can be achieved by the incorporation of chaotic advection in the mixing process, as for instance described by Aref, H. in Stirring by chaotic advection. J. Fluid. Mech., 1984, 143, pp. 1-21, and by J.M. Ottino in The Kinematics of Mixing: Stretching, Chaos and Transport, 1989, Cambridge University Press, Cambridge, MA. The stretching and folding mechanism of the chaotically advective flow regime creates fluid-fluid and fluid-particle interfaces exponentially in time, making chaotic advection very effective in mixing. Chaotic advection can result from repetitive flow changes caused by time-dependent changes in mixing speed and/or by spatially-dependent variations in mixing geometry.

One method of blending viscous fluids, such as polymers, including controlling of such blending to obtain coherent structures is known from US 6770340. However this method is only suitable to be performed on an experimental scale. The volumes of the experimental chaotic batch mixers currently employed are small (5-50 g) and not fit for any production on industrial scale. Enlarging the known experimental batch mixer in size is not an option, as several of its properties are disproportional with the size of the known chaotic mixer.

Another mixing method is described in WO 0034027, in which certain geometrical features in a screw configuration create chaotic mixing. The screw set-up is only to be used in single screw extruders.Accordingly it is an object of the present invention to overcome or ameliorate at least one of the disadvantages of the prior art. It is also an object of the present invention to provide alternative solutions which are less cumbersome in assembly and operation and which moreover can be executed relatively inexpensively. Alternatively it is an object of the invention to at least provide the public with a useful choice.

To this end the invention provides an apparatus for continuously blending a filler and a polymer, wherein the apparatus includes: an elongate barrel housing; and a pair of co-extensive first and second extruder screws extending longitudinally of the barrel housing and defining an upstream end and a downstream end, wherein the barrel housing and the first and second extruder screws together define a first conveying zone and at least one mixing zone, wherein the first conveying zone is positioned between the upstream end and the at least one mixing zone, wherein the at least one mixing zone includes a first mixing element associated with the first extruder screw and a mating second mixing element associated with the second extruder screw, and wherein the first and second mixing elements have mating convoluting contours. By thus modifying conventional extruder screw design to include low shear and elongational flow elements, the invention enables continuous production of electrically conductive polymers to an economically attractive scale. In combination therewith it is advantageous, when the barrel housing and first and second extruder screws further define a second conveying zone, which second conveying zone is positioned between the at least one mixing zone and the downstream end.

It is further advantageous when the apparatus according to the invention forms part of a twin screw plastic extruder. In this case it has also been found to be beneficial when the twin screw extruder has its first and second extruder screws driven to be co-rotating (both rotating in the same direction). The use of other extruder configurations, such as non-intermeshing co-rotating and counter-rotating set-ups, is however not meant to be excluded by the invention.

The apparatus according to the invention can also have its first and second mixing elements each including rotors with a substantially sinusoidal contoured geometry. Such rotors may further be assembled from an array of small and large diameter cylindrical sections, interspersed with conical sections. Alternatively such rotors may be assembled from an array of various diameter disc elements.

According to a further aspect of the invention the apparatus may also include a further mixing zone downstream of the at least one mixing zone. With such an arrangement it may be of further advantage, when the further mixing zone is separated from the at least one mixing zone by at least one intermediate conveying zone.

According to a still further aspect of the invention the at least one mixing zone may include first and second mixing rotors, each having a contour defining a first geometry on an upstream portion and a different second geometry on a downstream portion. With such mixing rotors the first and second geometries may differ in the number of convolutions per unit of axial rotor length.

The invention also provides for a method of continuously blending a first component and a second component, the method including: providing an elongate barrel housing; providing a pair of co-extensive first and second extruder screws to extend longitudinally of the barrel housing to define upstream and downstream ends; arranging for the barrel housing and the first and second extruder screws together to define a first conveying zone and at least one mixing zone; arranging for the first conveying zone to be positioned between the upstream end and the at least one mixing zone; arranging for the at least one mixing zone to include a first mixing element associated with the first extruder screw and to include a mating second mixing element associated with the second extruder screw;arranging for the first and second mixing elements to have mating convoluting contours; and providing the first component and the second component to the upstream end. In this method the first component may be a polymer and the second component may be a filler. The filler may includes a conductive material, which preferably is electrically conductive.

Further advantageous aspects of the invention will become clear from the appended description of preferred embodiments.

The invention will now be described in reference to the accompanying drawings, in which:
Figure 1 is a schematic partial longitudinal cross section of a twin-screw extruder;
Figure 2 is an enlarged detail, indicated as II in Figure 1;
Figure 3 is a partial view of a pair of mixing elements having a first alternative geometry;
Figure 4 is a partial view of a pair of mixing elements having a second alternative geometry;
Figure 5 is a partial view of a pair of mixing elements having a third alternative geometry;
Figure 6 is an illustration of a pair of extruder screws incorporating mixing elements of the third geometry; and
Figure 7 is an illustration of possible mixing elements combining the first and second geometries.

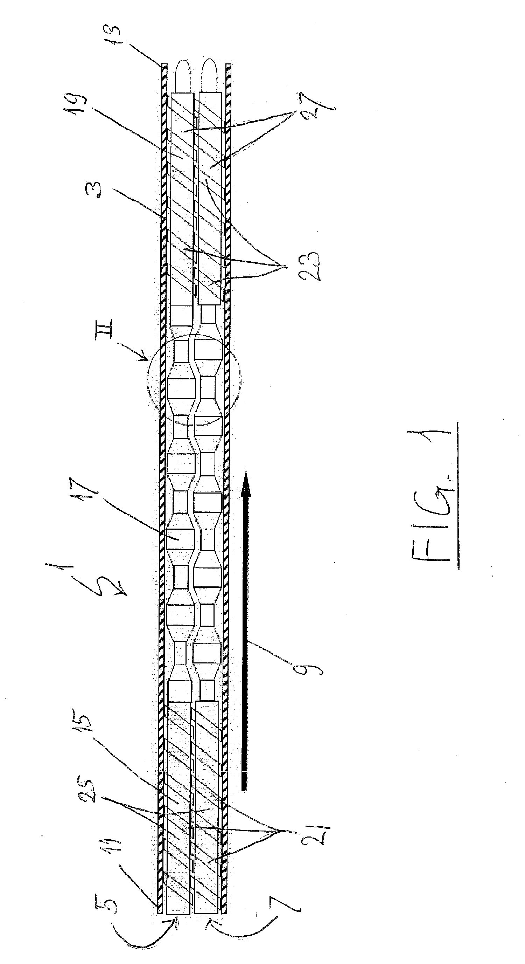

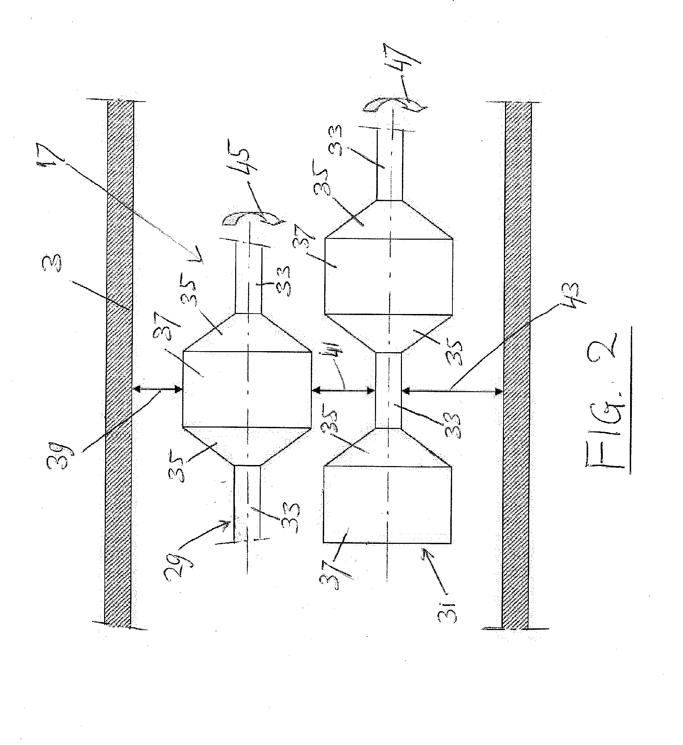

Figure 1, in cross-section, shows a conveying section of an extruder 1. A barrel housing 3, which is cross-sectioned in Figure 1, accommodates a pair of mating first and second extruder screws 5, 7. Screw extruders can have more than one central screw. Twin-screw extruders may operate with two screws that may either rotate in the same direction (co-rotating), or they may be counter-rotating. In co-rotating twin-screw extruders the surfaces of the screws in the intermeshing region move in opposite directions. The pair of extruder screws 5, 7 in this example is co-rotating to transport plastic material in the direction of arrow 9, from an upstream end 11 to a downstream end 13 of the barrel housing 3. The first and second extruder screws 5, 7 each define a first conveying zone 15, for feeding the plastic material, a mixing zone 17, for low shear, elongational mixing of the plastic material or compound, and a second conveying zone 19, for metering the plastic compound into an extrusion die or injection mould (not shown, but conventional). The mixing zone 17 has a particular geometry and configuration that will be explained in reference to Figure 2 that shows schematically an enlargement of the detail II indicated in Figure 1.

Apart from conveying material toward a die for extrusion or injection moulding, an extruder screw is also relied upon to perform mixing of feed material. Nonetheless for the purposes of the present invention the mixing properties of conventional extruder screws are inadequate. According to the present invention the first and second conveying zones 15, 19 can be shaped as conventional extruder screws having raised portions in the form of flights 21, 23, which have a larger diameter than the screw's central core 25, 27. The flights 21, 23 are helically arranged around the central cores 25, respectively 27. Mixing can very generally be defined as a process for reducing the non-uniformity of a composition. The basic principle involved is to induce physical motion in the components. The two types of mixing that are important in screw extruder operation are distribution and dispersion. Distributive mixing is used for the purpose of increasing the randomness of the spatial distribution of particles, such as electrically conductive particles in a polymer, without reducing the size of these particles. Dispersive mixing refers to processes that reduce the size of cohesive particles as well as randomizing their positions. In dispersive mixing, solid components, such as agglomerates, or high viscosity droplets are exposed to sufficiently high stresses to cause them to exceed their yield stress, and they are thus broken down into smaller particles, or to extend them until they become unstable and break up in smaller droplets, respectively. The size and shape of the agglomerates and the nature of the bonds holding the agglomerate together will determine the amount of stress required to break up the agglomerates. The applied stress can be shear stress, elongational stress or a combination thereof, and generally, elongational stress is more efficient in achieving dispersion than is shear stress. An example of dispersive mixing is the manufacture of a color concentrate where the breakdown of pigment agglomerates below a certain critical size is crucial. An example of distributive mixing is the manufacture of miscible polymer blends, where the viscosities of the components are reasonably close together. Thus, in dispersive mixing, there will always be distributive mixing, but distributive mixing will not always produce dispersive mixing.

The mixing zone 17, as schematically illustrated in Figure 2, includes a first mixing rotor 29 and a second mixing rotor 31, which in general have mating convoluting contours. The convoluting contours of each first and second rotor 29, 31, which provoke low shear, elongational mixing, can be obtained by alternatingly assembling small diameter and large diameter cylindrical sections 33, respectively 37, interspersed with fluted or conical sections 35. It is important that the gaps 39, 43 between the mixing rotors 29, 31 and the barrel housing 3 are relatively wide. It is also important that the gap 41 between the first and second mixing rotors 29, 31 is relatively wide and that the first and second mixing rotors 29, 31 are co-rotating in accordance with the arrows 45, 47, such as to benefit from chaotic mixing.

For polymer compositions comprising polymers with large differences in viscosity it has been demonstrated that mixing by applying elongational deformation is more effective and favourable than mixing by pure shear deformation, especially when elongational deformation is repeated in a more or less regular fashion. Mixing by applying elongational deformation is also referred to as "dispersive mixing" as opposed to "distributive mixing". While distributive mixing aims at achieving a homogenous concentration, e.g. by splitting up the stream as many times as possible, dispersive mixing aims at breaking down one phase by applying high shear or tension forces in order to obtain blending of the components of the stream. The blend thus obtained may be free from visual inhomogenities, but does not have to satisfy the requirement of homogenous concentration. However with the inclusion of the mixing zone 17 in-between conveying zones 15, 19, using mating convoluting mixing rollers 29, 31 it was found possible to obtain a homogenous distribution and dispersion of conductive particles in a polymer matrix in a continuous manner and with an economically attractive yield.

For electrostatic discharge (EMI) shielding and electromagnetic interference (ESD) the continuous production of electrically conductive polymers, containing electrically conductive particles mixed in a polymer matrix, and having an optimal distribution of the particles, resulting in a high conductivity level at a low percolation threshold, was previously not possible on industrial scale. Results of batchwise made mixtures show that under low shear and elongational flow conditions the dispersion of certain types of conductive particles improves, which results in higher conductivity at lower filler loads. The built up of the screws for co-rotating twin screw extrusion commonly includes of a conveying, melting and mixing zone, where high levels of shear exist. The invention enables continuous production of electrically conductive polymers by means of a commercially available co-rotating twin screw extruder. To this end a conventional screw design for the transport and the heating of the polymer matrix and conductive fillers is extended with low shear and elongational flow mixing elements. By replacing the high shear mixing elements by low shear, elongational flow elements, compaction and/or re-agglomeration of the particles is avoided whereby better dispersion can be achieved. This results in network formation of the conductive particles and thereby higher conductivity or the same conductivity using less conductive filler. Apart from this the low shear stresses also result in less degradation of the polymer matrix. Due to the low shear, elongational elements the polymer/filler mixture will be subjected to folding and stretching, resulting in a better dispersion of the conductive particles in the polymer matrix. The number of mixing elements depends on the type and amount of conductive material and on the conductivity level to be reached (aimed level of conductivity, for EMI and ESD applications,1 S/cm at a filler loading of <1%wt).

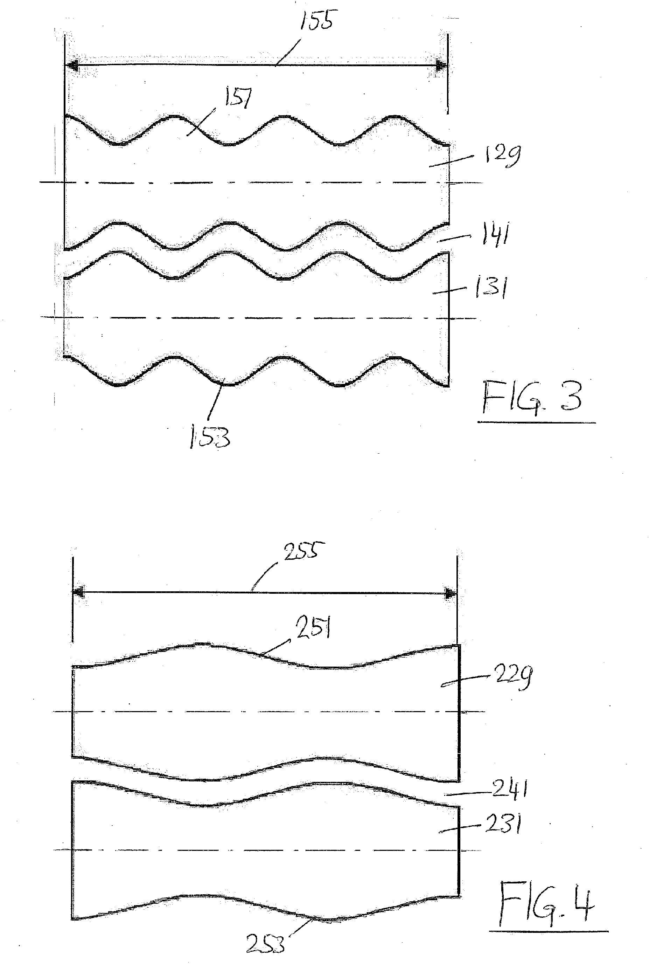

In Figure 3 a partial view is shown of a pair of first and second mixing rotors 129, 131 that have a first alternative convoluting geometry. The first alternative geometry includes a relatively large number of sinusoidal mating convolutions 151, 153 per axial length unit 155 of mixing rotor. The length unit 155 is established as three times the diameter of the rotors 129, 131 over the tops of the convolutions or the "flights" of the mixing rotors. The number of sinusoidal flanks, for the embodiment of Figure 3, is seven per length unit 155. As shown in the partial view of Figure 4 a pair of mixing rotors 229, 231 can have a second alternative geometry. This second alternative geometry comprises a relatively small number of sinusoidal mating convolutions 251, 253 per length unit 255. As with the embodiment of Figure 3, the length unit 255 is defined as three times the diameter over the tops of the convolutions of the mixing rotors 229, 231. In this case there are only three flanks of the sinusoidal convolutions per length unit 255. It is seen in Figures 3 and 4, that the gaps 141, 241 between the mating rotor elements are relatively wide.

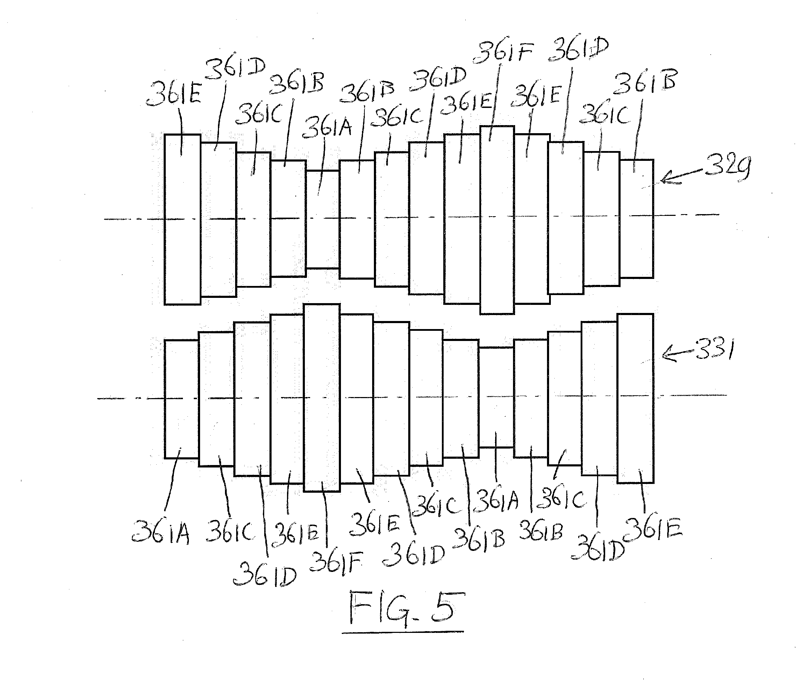

Yet a third alternative geometry is illustrated in Figure 5, which shows a partial view of a pair of mixing elements or rotors 329, 331. These mixing rollers 329, 331 are not unlike those shown in Figure 4, but have been assembled from various diameter discs 361A, 361B, 361C, 361D, 361E and 361F to approach a sinusoidal shape. In order to avoid shear in the mixing zone, it is preferred that the raised portions, or "flights" provided by the tops of the convolutions are not helically wound, but rather circumscribe the mixing rotors in a plane perpendicular to the mixing rotors. Nonetheless it is conceivable that a slight helical angle may add certain benefits without detriment to the chaotic mixing phenomenon.

In screw extruders, significant mixing occurs only after the polymer has melted. Thus, the mixing process is generally thought of as extending from the beginning of the melting zone up to and including the extrusion die, or injection mould. Within this area there will be considerable non-uniformities in the intensity of the mixing action and the duration of the mixing action in the barrel section. In molten polymer, the stress is determined by the product of the polymer melt viscosity and rate of deformation. Therefore dispersive mixing should generally be done at as low a temperature as possible to mix at a possibly highest (shear and elongational) viscosity of the fluid, and with it, at possibly highest stresses in the polymer melt. In the context of the present invention it is also proposed to either include more than one mixing zone, each separated by a conveying zone, and/or to include successive mixing zones of different geometry.

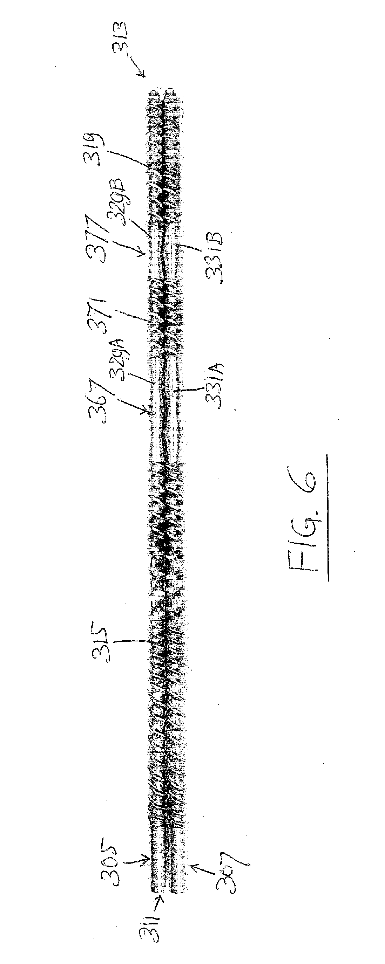

Figure 6 is an illustration of a pair of mating extruder screws 305, 307 that incorporate first and second mixing zones 367, 377 separated by intermediate conveying zone 371. The mixing zones 367, 377 include mixing elements 329A, 331A, 329B and 331B of the third alternative geometry, as shown in Figure 5. The extruder screws 305, 307 of Figure 6 for clarity are shown without barrel housing, but the skilled person will be familiar with the arrangement of such extruder screws in a barrel housing. The extruder screws 305, 307 each have an upstream end 311 and a downstream end 313. Starting from the upstream end 311 is a first conveying section 315, which as shown can include several sub-sections with a different helix angle for the helical flights. A similar liberty of design would apply to the second conveying section 319 adjacent the downstream end 313. To ensure sufficient mixing the total length of each of the extruder screws 305, 307 shown in Figure 6 is preferably chosen within a range of between 35 to 45 times the diameter over the flights. It should also be clear to the skilled person, that the first and second mixing zones 367 and 377 can use mixing rotors having a different geometry.

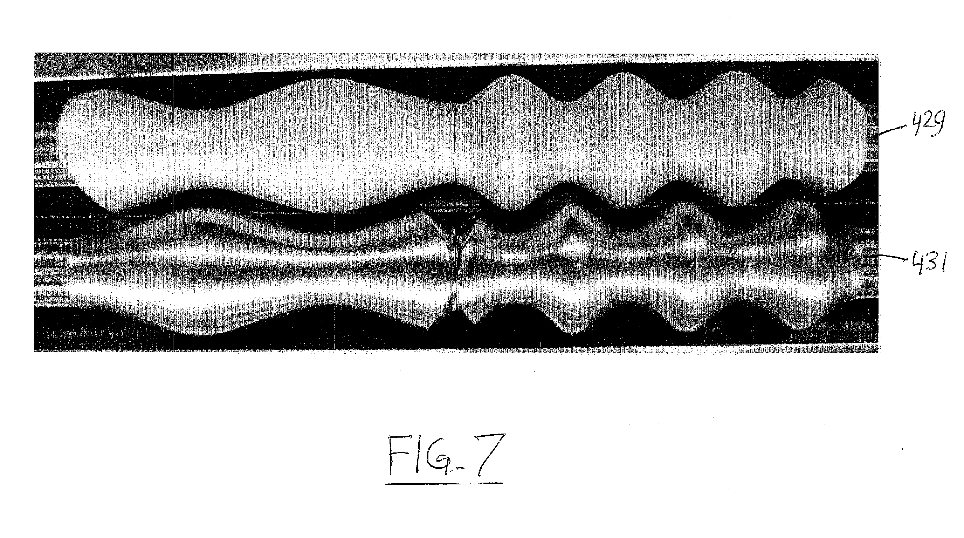

As illustrated in Figure 7 it is also possible to combine successive mixing zones using mixing rotors of different geometry, by providing mixing elements having geometries, such as the first and second alternative geometries. While it has been a first approach that the first and second mixing rotors 429, 431 each have the first alternative geometry positioned downstream of the second alternative geometry, it is not inconceivable that similar, or even better results may be obtained with an inverse arrangement. It is further shown in Figure 7 that the first rotor 429 of the mating pair has a roughened surface, while the second rotor 431 has a smooth polished surface. Rather than combining a roughened rotor with a smooth rotor, it is presently considered more efficient to combine a roughened rotor with a roughened rotor and a smooth rotor, with a smooth rotor. For the sake of simplicity both rotor options are shown together in Figure 7.

To provoke chaotic mixing in addition to low shear mixing, it was found that the pressure of the compound in the mixing zone should not be excessive. To this end it is possible to predetermine, control and adjust the pressure in the mixing zone by selecting appropriate helix angles for the flights in the conveying zones upstream and downstream of the mixing zone.

As regards electrically conductive particles suitable for blending with polymers, carbon nanofibres, carbon black, graphite, carbon nanotubes and metallic particles can all be beneficially used with the present invention. Polymers that can be used are polypropylene, polyethylene, polycarbonate, polystyrene, acrylonitrilbutadienestyrene, polyethyleneterephtalate, polybutyleneterephtalate, polyvinylchloride, polyamide, styreneacrylonitril and other polymers suited for low shear mixing and blends and/or alloys of these materials. Companies such as NanoCyl, Hyperion, Bayer, Showa Denko and others supply CNTs on a commercial basis. In comparison the conductivity of carbon black [CB] can also be high when mixed into a polymer matrix at nanoscale. The invention also includes the use of conductive fillers such as conductive carbon black supplied by Timcal and Akzo Nobel Chemicals BV.

Tests with each of these fillers show that using the method and apparatus according to the invention low shear, elongational flow conditions are present and enable continuous, one-step processing. Through low shear, elongational flow conditions compaction and re-agglomeration of nano particles can be avoided, giving better dispersion and thereby network formation and higher conductivity levels. A reduction of cost can be achieved by using a one-step process.

The one-step processing of electrically conductive polymers, comprising a polymer matrix and conductive fillers, thus results in low resistivity using minimal amounts of conductive fillers (low percolation threshold). The one-step process also results in a general cost reduction and achieves a reduction of filler content, while retaining a high conductivity level compared to conventional continuous production processes. This not only results in a reduction of costs, but also yields improved mechanical properties of the polymers obtained by the invention.

The invention is thus embodied in an apparatus (1) for continuously blending a filler and polymer. The apparatus includes an elongate barrel housing (3), and a pair of co-extensive first and second extruder screws (5, 7; 305, 307) extend longitudinally of the barrel housing (3) and define an upstream end (11; 311) and a downstream end (13; 313). The barrel housing (3) and the first and second extruder screws (5, 7; 305, 307) together define a first conveying zone (15; 315) and at least one mixing zone (17; 367, 377). The first conveying zone (15; 315) is positioned between the upstream end (11; 311) and the at least one mixing zone (17; 367, 377), and the at least one mixing zone (17; 367, 377) includes a first mixing element (129; 229; 329; 329A, 329B; 429) associated with the first extruder screw (5; 305) and a mating second mixing element (131; 231; 331; 331A, 331B; 431) associated with the second extruder screw(7; 307). The first and second mixing elements have mating convoluting contours. The invention is further also embodied in a method of continuously mixing, which includes feeding the filler and the polymer to the upstream end (11; 311) of the apparatus (1).

The invention is useful for plastics compounders, plastics processing industry, telecom, consumer electronics, and the off-shore industry. Applications for electrically conductive polymers obtained by the invention may include:
housings for sensitive electronic equipment, such as for automotive, electrical, ICT, medical and military uses;
racks and holders for printed circuit boards (PCB);
motor housings;
cases for mobile phones;
trays for holding electronic parts and components during production and assembling;
moulded-in circuit technology; and
multi-layer mouldings having a conductive layer to enhance electrostatic coating.

Besides the mechanical and chemical properties of plastics for applications in both EMI shielding and ESD protection the conductivity of the materials is an important parameter. To obtain sufficient conductivity a proper distribution of the conductive components in the polymer matrix is essential. The target conductivity level is 30 S/cm with a minimum level of 1 S/cm.

It is thus believed that the operation and construction of the present invention will be apparent from the foregoing description. The invention is not limited to any embodiment herein described and, within the purview of the skilled person, modifications are possible which should be considered within the scope of the appended claims. Similarly all kinematic inversions are considered inherently disclosed and to be within the scope of the present invention. The term "comprising" when used in this description or the appended claims should not be construed in an exclusive or exhaustive sense but rather in an inclusive sense. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Features which are not specifically or explicitly described or claimed may be additionally included in the structure according to the present invention without deviating from its scope.

## Claims

1. Apparatus for continuously blending a filler and a polymer, wherein the apparatus includes:
an elongate barrel housing; and
a pair of co-extensive first and second extruder screws extending longitudinally of the barrel housing and defining an upstream end and a downstream end, wherein the barrel housing and the first and second extruder screws together define a first conveying zone and at least one mixing zone, wherein the first conveying zone is positioned between the upstream end and the at least one mixing zone, wherein the at least one mixing zone includes a first mixing element associated with the first extruder screw and a mating second mixing element associated with the second extruder screw, and wherein the first and second mixing elements have mating convoluting contours.

2. Apparatus according to claim 1, wherein the barrel housing and first and second extruder screws further define a second conveying zone, which second conveying zone is positioned between the at least one mixing zone and the downstream end.

3. Apparatus according to claim 1 or 2, wherein the apparatus forms part of a twin screw plastic extruder.

4. Apparatus according to claim 3, wherein the twin screw extruder has its first and second extruder screws driven to be co-rotating in the same direction.

5. Apparatus according to any preceding claim, wherein the first and second mixing elements include rotors having a substantially sinusoidal contoured geometry.

6. Apparatus according to any preceding claim, wherein the first and second mixing elements include rotors assembled from an array of small and large diameter cylindrical sections, interspersed with conical sections.

7. Apparatus according to any preceding claim, wherein the first and second mixing elements include rotors assembled from an array of various diameter disc elements.

8. Apparatus according to any preceding claim, including a further mixing zone downstream of the at least one mixing zone.

9. Apparatus according to claim 8, wherein the further mixing zone is separated from the at least one mixing zone by at least one intermediate conveying zone.

10. Apparatus according to any preceding claim, wherein the at least one mixing zone includes first and second mixing rotors, each having a contour defining a first geometry on an upstream portion and a different second geometry on a downstream portion.

11. Apparatus according to claim 10, wherein the first and second geometries differ in the number of convolutions per unit of axial rotor length.

12. Method of continuously blending a first component and a second component, the method including:
providing an elongate barrel housing;
providing a pair of co-extensive first and second extruder screws to extend longitudinally of the barrel housing to define upstream and downstream ends;
arranging for the barrel housing and the first and second extruder screws together to define a first conveying zone and at least one mixing zone;
arranging for the first conveying zone to be positioned between the upstream end and the at least one mixing zone;
arranging for the at least one mixing zone to include a first mixing element associated with the first extruder screw and to include a mating second mixing element associated with the second extruder screw;
arranging for the first and second mixing elements to have mating convoluting contours; and
providing the first component and the second component to the upstream end.

13. Method according to claim 12, wherein any one of the first and second components includes one of a polymer, an inherently conductive polymer and an electrically conductive filler.

14. Method according to claim 12 or 13, wherein the first component is a polymer and the second component is a filler and wherein the filler includes a conductive material.

15. Method according to claim 14, wherein the conductive material is electrically conductive.
